# EUROPEAN PATENT SPECIFICATION

(11) **EP 3 643 166 B1**
(45) Date of publication and mention of the grant of the patent: **18.11.2026**
(21) Application number: 19205327.0
(22) Date of filing: 25.10.2019
(51) Int. Cl.: A01K 1/03

(54) **CAGE FOR LABORATORY ANIMALS AND RELATED LID**
KÄFIG FÜR LABORTIERE UND DAZUGEHÖRIGER DECKEL
CAGE POUR ANIMAUX DE LABORATOIRE ET COUVERCLE ASSOCIÉ

(30) Priority: 26.10.2018 IT 201800009835
(43) Date of publication of application: 29.04.2020
(73) Proprietor: Tecniplast S.p.A., 21020 Buguggiate (IT)
(72) Inventor: BERNARDINI, Pietro, 21020 Casciago (IT); CASSETTI, Simone, 20025 Legnano (IT); MALNATI, Giovanni, 21046 Malnate (IT)
(74) Representative: Pizzoli, Antonio Mario

(56) References cited:
- DE-U1- 202018 104 015
- GB-A- 890 698
- US-A- 3 537 428
- US-A- 5 572 953
- US-A1- 2006 254 528
- US-A1- 2014 245 966

## Description

### TECHNICAL FIELD OF THE INVENTION

The present invention belongs to the field of housing for laboratory animals. The present invention in particular relates to a cage for housing laboratory animals. In detail, the present solution relates to a cage of the aforesaid type, equipped with an innovative opening and access system and/or with an innovating sealing system for the effective and reliable isolation of the inside of the cage. Again in greater detail, the present invention relates to the handling and positioning of the lid of a cage of the aforesaid type and/or to a system for the facilitated closing and opening of said cage, in particular for restraining and releasing, respectively, said lid and/or an innovative gasket for the isolation of the inside of the cage.

### BACKGROUND ART

To date, the use of cages having variable sizes and shape according to the number of animals to be housed and the conditions to provide the animals themselves with is commonly used for housing laboratory animals such as for example, small rodents or the like. For example, the use of "ventilated" cages - namely those in which a flow of forced air taken from a main circuit is caused to circulate - is commonly used.

However, beyond the specificities provided according to needs and/or circumstances, the cages of known type, or at least those most commonly used, essentially comprise a basin or tray intended to contain the litter, and a lid (also called top in the following); moreover, a third component, the feeder, intended to contain the feed in position which is accessible to the animals and so that the feed does not come into contact with the litter, is usually accommodated in the basin. Finally, a bottle with drinking water may be prepared inside the cage, or also outside the cage and resting on the lid.

The lid, or top, is positioned over the basin (and possibly fastened to the basin by means of suitable closing means such as clips, handles or the like) and the desired sealing is ensured due to a gasket positioned between the two elements so that the basin-lid system is adequately isolated from the outside environment, in particular from the animal housing where the animal house users operate, thereby avoiding contaminations both of the animal housing towards the inside of the cage and from the inside of the cage towards the animal housing or external environment.

Indeed, it is worth noting that in most cases, the housing relates to "clean" animals, in particular called "SPF", Specific Pathogen Free animals, wherein in the case of "clean" animals, the volume and the inner surfaces of the cage are kept and are considered "clean", while everything outside the cage, including the outer surface of the cage itself, is considered potentially "dirty" and contaminated. Contrarily, the opposite concept applies in the case of potentially contaminated animals, in particular from the microbiological viewpoint, wherein everything inside the cage is considered "dirty" and therefore potentially contaminating for the outside, including the operators.

**In** any case, the primary need in both cases is that of avoiding exchanges and/or commingling (in particular microbiological contaminations) between what is confined inside the cage and what is outside, thereby maintaining the concept of aseptic conditions.

**It** is therefore apparent that all operations providing opening the case, and in particular removing the lid, are to be carried out according to such methods as to avoid the aforesaid commingling and therefore any contamination of the cage and of the accessories therein and of the animals, but also of the external environment and of the operators in particular. Such operations comprise by way of non-limiting example, changing the cage (in order to reposition the animal in a new basin with clean and dry litter, new feed and sometimes fresh water), taking and relocating the animals according to gender and before they reach reproductive maturity, wherein the removal of the lid is required also in the case of "procedures", such as for example, in the case of specific experiments, weighing the animals, injections and/or collecting body fluids, diagnostics, medical examinations, surgical operations, etc., and wherein according to the most commonly implemented methods, the aforesaid operations are carried out in controlled atmosphere in changing or microbiologically safe stations.

Said microbiological safe stations, defined also more simply as cage changing, essentially comprise a work surface hit by a flow of barrier gas, in particular barrier air, perpendicular to the work surface, and possibly a further flow which is substantially parallel to the work surface, said work surface being closed on two/three sides by means of fixed partitions and accessible from one side at which a vertical sliding glass is provided, wherein due to the calibration of the one or more barrier flows taken from peripheral slits provided along the outer periphery of the work surface, an attempt is made to obtain the desired protection and to avoid the aforesaid contaminations of animals and/or cages and/or components and/or operator. Practically, the air curtains prevent what is outside the work surface from contaminating the material inside and what is inside and potentially contaminated from exiting the laminar flow system and reaching operators and environment.

However, the cages of known type complicate the operations summarized above, even compromising their effectiveness and/or reliability.

Indeed, each of the operations summarized above necessarily comprises handling the lid which in particular is first to be removed from the seat thereof over the basin, then positioned on the work surface (generally beside basins or in position at the back, paying attention not to allow the inner surfaces to come into contact with the work surface or other instruments lying thereon), and finally grasped (taking care not to touch the inner surface thereof), removed from the position thereof on the work surface and replaced in the seat thereof over the basin, thereby reclosing the cage.

However, handling the lid results in a series of drawbacks essentially due to the limited space on the work surface.

For example, when the cage is changed, there are necessarily the "dirty" cage, with the animals and used litter, and the new sterile "clean" cage on the station work surface, with the apparent risk of accidental contacts between "dirty" components and "sterile" components, and in particular for the dirty lid to come into contact with clean components.

Likewise, when the genders are separated, there are at least three cages on the station work surface: the original "dirty" one, where the litter is, and at least two "clean" cages at the sides, each one intended to receive the animals of one or the other gender; clearly here, the risk of contact between dirty components and clean components, in particular between the dirty lid and clean components, is increased in consideration of the high number of components to be arranged on the work surface.

**In** consideration of what is disclosed above, the problems and/or drawbacks encountered in handling or managing cages according to the prior art, in particular the lids of the cages according to the prior art, may be classified in the following groups.
1) Risk of contamination of the parts inside the cage, and therefore of the animals, with outer parts of the cage or with other objects;
2) Risk of contamination of the operators;
3) Risk of interrupting the integrity of the laminar flow and the aseptic conditions inside the workstation;
4) Ergonomic risk due to repetitive movements;
5) Human risk due to the lack of a clear procedure for guiding the operator.

With regards to the risks in point 1), the same are at least partly due to the fact that for example, the operator's hands may accidentally come into contact with the inner parts of the lid during each of the three handling steps described above. Moreover, when the lid is placed on the work surface, the inner parts thereof may touch potentially contaminated parts such as the outer parts of the cage itself, the work surface, containers, potentially contaminated test tubes or bottles within the laminar flow. Finally, it is worth noting that such operations are made difficult due to the obligation, or at least the opportunity, for the operators to wear gloves which decrease friction and sensitivity of the operator's hands, to the minimal spaces in which safety is ensured and also to the front safety glass which certainly limits the freedom of movement of the arms.

With regards to the risks in point 2), it is worth noting that while the risk in housing generally is associated with the contamination of the animals by pathogens introduced by the operators or already present in the housing rooms, the same potential problems described above could result in the contamination of the operators and surrounding environment by animals hosting microbiological agents.

With regards to the risks in point 3), it is worth noting that as described above, the limited area of the work surface often is crowded or occupied because in addition to the basins being changed, there may be a whole series of equipment useful for the operations, such as disinfectant and/or food containers, water bottles, test tubes, microbiological screening vessels, etc.

Such objects are to be carefully positioned in the sterile zone because if they are even briefly positioned outside it during the handling and then used, they themselves could be contaminated or contaminate the environment; moreover, such objects are not to be positioned on the periphery of the laminar flow zone because obstructing the air intakes could nullify the protection normally ensured by the sterile flow curtains.

Therefore, the risk is high of human errors which may compromise the required sterility.

With regards to the risks in point 4), it is worth noting that even hundreds of cages are changed by one operator alone in a housing utility every day: such a procedure results in the repetition of the same movements mainly borne by the wrist, fingers, elbow and shoulder of the housing technicians, such as opening the lid, positioning it on the work surface generally to the side of the basin and the successive closing thereof, which result in a rotation of the wrist and hand by at least 180 degrees, first in one direction and then in the other. It is known that pathologies such as Carpal tunnel syndrome may affect such operators, also due to these movements.

Finally, with regards to the risks in point 5), it is worth noting that to date, regardless of the system and of the brand of cage used, there is no clear procedure for accessing the IVCs (individually vented cages): each facility implements standard operations which tend to minimize the above-described risks, but there is no optimized process recommended by the suppliers because no system exists which simplifies, streamlines and makes such an operation safer and repeatable.

In an attempt to overcome the drawbacks described above, and therefore to reduce in particular the risks set forth in points 1) to 5), support devices called "top holders" for supporting the lid (top) of the cage when it is removed from the basin have been suggested in the recent past. In use, said supports in particular are positioned on the work surface of the changing station and the lid is positioned on one of them when removed from the basin. Therefore, said supports at least partly support the task of the operator who knows where to position the lid; moreover, they limit the risk for the inner surface of the (dirty) lid to come into contact with clean components and/or from being touched by the operator's hands.

However, although they are appreciable for the aforesaid reasons, the top holders are affected by various drawbacks and do not provide an appreciable and complete solution for the problems disclosed above.

Indeed, also the top-holder type systems on the market are they themselves to be positioned on the already limited work surface in fixed position, occupying a portion thereof and hindering the handling of the cages.

Moreover, by being placed externally to the cage at the sides in a position at the back, they require an even larger maneuvering space for the operator when they are opened and closed with respect to that available in the absence thereof. Moreover, as mentioned above, in the individually ventilated cages of known type, the lid is positioned over the basin and, due to the aforesaid gasket positioned between lid and basin or tray, the desired and/or required sealing is ensured so that the system can form a barrier between the atmosphere in the cage with the animals and the external environment where the animal house operators work, wherein the sealing by the gasket in the systems of known type may not be left out of consideration by the use of two or more handles arranged at the ends of the basin which, when switched to closing position, ensure the gasket is subjected to pressure and therefore to elastic deformation.

Moreover, said handles also serve the purpose of securing the top to the cage if it is grasped and lifted by the top, and in any case ensure the lid is not inadvertently removed with the subsequent accidental contamination of the inside of the basin and/or the lid itself.

The operation of accessing the cage and successive closing by operating on the handles however is affected by various disadvantages and/or drawbacks which may be summarized as follows.
- Problem associated with the operator ergonomics, who repeats the switching operation of the handles even hundreds of times a day, with the established risk of the occurrence of problems similar to the Carpal tunnel pathology;
- Visibility is one of the most important features of the cages for housing animals, for example but not only for the daily inspection of the health of the animals, an operation which is repeated many times every day; however, said handles hinder the visibility into the cage.
- The handles are possible breeding grounds for dirt and contaminations which are difficult to wash because "applied" and moreover, are to be replaced often due to wear because they have become fragile and are not part of the main basin or top structure;
- Sound emission problem when the handles are opened and closed, possible source of stress for the animal.

Finally, the gaskets of known type often have revealed themselves to be counterproductive because they hinder both the positioning of the lid over the basin (for example, due to unexpected movements or deformations) and the repositioning of the lid in opening position due for example, to the excessive pressure to which they are subjected, and therefore to the excessive resistance to the removal of the lid itself.

Examples of cages for housing laboratory animals according to the prior art are known from US 2006/254528, US 5572953, GB 890698 and US 3537428.

Therefore, it is the main object of the present invention to overcome or at least minimize the problems summarized above and encountered in the prior art.

In particular, it is a first object of the present invention to provide a solution which allows the facilitated handling of the lid of a cage for laboratory animals while limiting the risks of contamination. In detail, it is one of the objects of the present invention to suggest a solution which allows the repositioning of the lid by means of quick, safe and simply-executed operations. Again, in greater detail, it is an object of the present invention to suggest a solution which allows the aforesaid repositioning of the lid but simultaneously does not complicate the operations of removing the lid, if desired and/or required.

And again, it is a further object of the present invention to provide a closing and opening system which allows both restraining and releasing the lid to and from the basin, respectively, by means of simple and immediate operations and methods which are not very intrusive for the operator, and also avoiding the use of systems and/or handles or the like, as summarized above.

Finally, it is a further object of the present invention to provide a gasket which is shaped and positioned not only so as not to hinder the restraining and releasing of the lid to and from the basin, respectively, but contrarily so as to improve both the aforesaid restraint and isolation of the inside of the cage.

### DESCRIPTION OF THE PRESENT INVENTION

In consideration both of the drawbacks encountered in the known art and the present objects, the present invention relates to a cage according to embodiments which are defined in the claims.

### BRIEF DESCRIPTION OF THE DRAWINGS

The present invention is further clarified below by the following detailed description of possible embodiments depicted in the drawings, in which features and/or corresponding or equivalent component parts are identified by the same reference numerals. It has in any case to be noted that the present invention is not limited to the embodiments described below and depicted in the drawings; contrarily, all those variants and/or modifications of the embodiments described below and depicted in the accompanying drawings, which are clear and obvious to those skilled in the art, fall within the scope of the present invention.

In the drawings:
- Figure 1 shows a perspective view of a cage according to an embodiment of the present invention;
- Figure 2 shows a perspective view of a lid of a cage according to an embodiment of the present invention;
- Figure 3 shows a perspective view of a basin of a cage according to an embodiment of the present invention;
- Figure 4 shows a perspective view of a feeder for a cage according to an embodiment of the present invention;
- Figure 5 shows a perspective view of a lid of a cage according to an embodiment of the present invention;
- Figure 6 shows a perspective view of a cage according to an embodiment of the present invention, with the lid in opening position;
- Figure 7 shows a side view of a cage according to an embodiment of the present invention, with the lid in opening position;
- Figures 8 and 9 show perspective views of a lid of a cage according to an embodiment of the present invention and of a cage according to an embodiment of the present invention with the lid in opening position, respectively;
- Figures 10 and 11 show a perspective view of details of the basin and of the lid of a cage according to an embodiment of the present invention;
- Figures 12 to 15 show sectional views of a further solution implemented in a similar cage.

### DETAILED DESCRIPTION OF THE PRESENT INVENTION

The present invention is particularly applicable to the field of housing for laboratory animals, this being the reason why the present invention is described below with particular reference to the applications thereof in the field of housing for animals.

It is in any case worth noting that the possible applications of the present invention are not limited to those described below. Contrarily, the present invention is conveniently applied in all those cases in which it becomes necessary to optimize the opening of a container including a main containment portion and a lid switchable between a first opening position, in which it prevents access inside said main portion, and a second opening position in which accessing the inside of said main portion contrarily is allowed and/or possible.

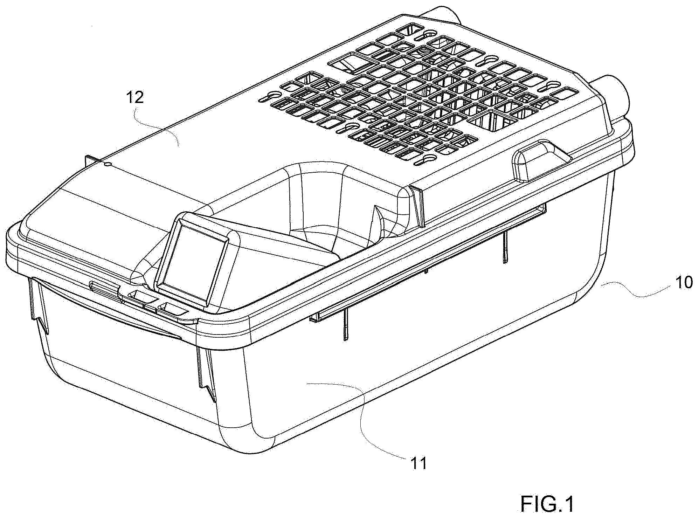

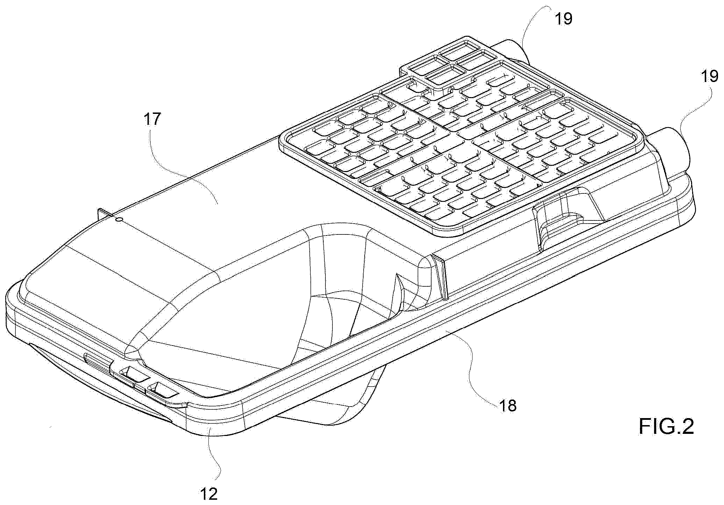

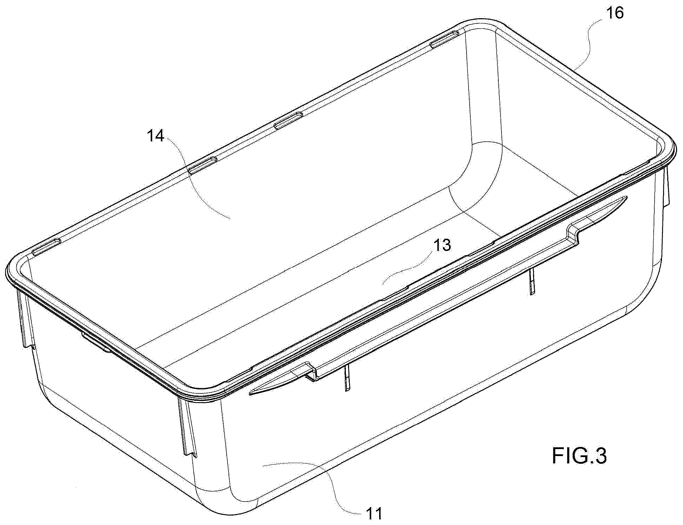

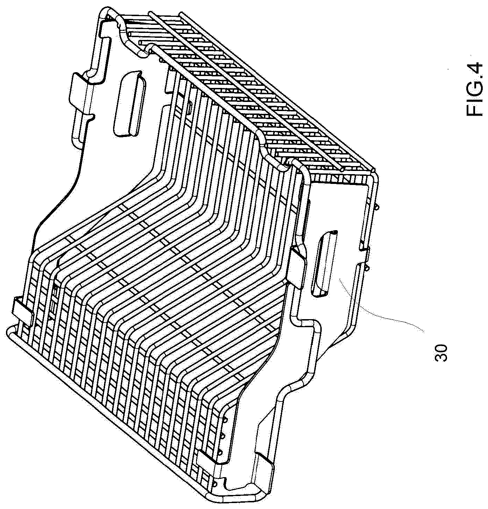

The cage according to an embodiment of the present invention is identified as a whole by numeral 10 in figures 1 to 3; as depicted, cage 10 comprises a basin 11 intended to contain the litter for animals to be housed (possibly together with other accessories such as for example, the feeder 30 in figure 4), wherein the basin 11 substantially defines the space available to the animals. Again as depicted, cage 10 comprises a lid 12 adapted to be positioned over the basin 11 (and possibly fastened thereto by means of fastening means which are not depicted) in the closing position in figure 1 (in which it prevents the animals from exiting and also access inside basin 11), and to be removed from basin 11, for example when access to the inside of basin 11 is required by an operator and/or when it is required to perform the operations summarized above such as for example, changing the litter or similar operations. As shown in detail, basin 11 has a box-like shape (and rectangular in the non-limiting example depicted in the drawings) and comprises a substantially flat bottom 13 and four side walls 16 opposed to one another in pairs, joined to one another and joined to bottom 13. For the sake of conciseness, reference is indifferently made in the following to a single side wall 16 or also to the overall side wall 16, as mentioned formed by the four side walls opposed to one another in pairs. For its part, as depicted in figure 2, lid 12 comprises a true main covering portion 17 from which a wall or lateral edge 18 extends in substantially transverse direction. According to one embodiment as depicted in figure 2, lid 12 comprises a grid, a depression for housing and positioning a container for drinking liquids, and also air intakes 19 for introducing and discharging ventilated and/or forced air into and from cage 10, respectively. The air intakes 19, as the grid and the aforesaid depression, are in any case not essential for the objects of the present invention and therefore a detailed description thereof is omitted for the sake of conciseness.

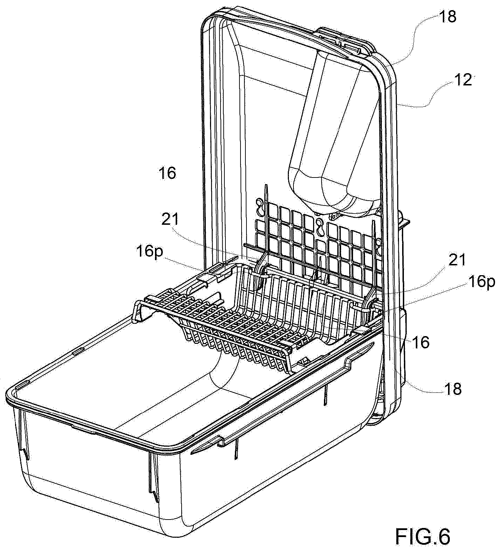

As to feeder 30 in figure 4, according to essentially known methods which therefore are not described in detail, the same is intended to be positioned in cage 10, for example as depicted in figure 6, and is shaped so as to contain and make a feed available to the animals, in particular so that the feed does not come into contact with the litter. Feeder 30 is also not essential for the purposes of the present invention.

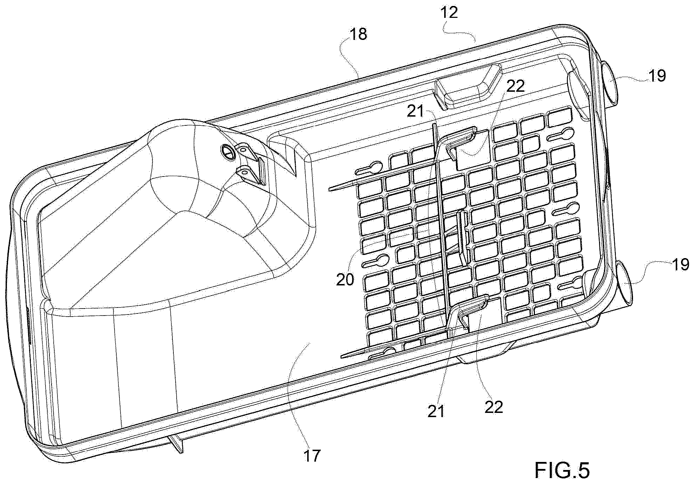

Again as mentioned above, the cage according to the present invention comprises peculiarities aiming to optimize the handling of lid 12; said peculiarities are described below with reference to figures 5 to 7, in which component and/or characteristic parts of cage 10 according to the present invention described above with reference to the drawings, are identified by the same reference numerals.

Reference numeral 20 in figure 5 identifies restraint means as a whole, adapted to allow the facilitated positioning of lid 12 in a different opening position from the closing position in figure 1, in which access to the inside 14 of cage 11 in particular is possible. Said restraint means 20 essentially comprise a pair of substantially identical hooks 21, wherein therefore, a detailed description of one hook 21 alone is given below, again for the sake of conciseness.

As depicted, hook 21 extends from the inner surface of the covering portion 17 (that facing the inside 14 of basin 11 with lid 12 in the closing position in figure 1) and comprises a first extension portion which substantially is perpendicular to the covering portion 17, and an end extension portion which extension direction lies on a plane substantially parallel to the covering portion 17. Therefore, hook 21 defines an engagement and housing seat 22, the function of which is described in greater detail below with reference to other drawings. Moreover, it is important to note how both hooks are arranged inside the space defined by the lateral edge 18 of lid 12 at a predefined distance from the edge itself so that, with lid 12 in the closing position in figure 1, none of the hooks 21 engage or are in contact with any portion of basin 11. The hooks 21 therefore do not prevent the removal and separation of lid 12 from the closing position in figure 1, for example by lifting, should it become necessary for example to remove lid 12 and separate it from basin 11, for example by positioning it on the work surface of a changing station. However, the hooks 21 allow the repositioning of lid 12 according to the following methods.

By lifting the end of lid 12 opposite to the end including the air intakes 19, and therefore opposite to the direction towards which the hooks 21 face, and translating it to rest on basin 11, the hooks 21, in particular the ends thereof, engage (hit) the inner surface of the side wall 16 of basin 11. At this point, with the ends of the hooks 21 in contact with the inner surface of the side wall 16, the hooks 21 progressively engage respective end portions of the side wall 16 at the upper edge of the side wall 16 by means of further rotation of lid 12 (clockwise with respect to figure 6), wherein a respective end portion of the side wall 16, as mentioned close to the upper edge of the side wall 16, is accommodated in the housing and engagement seat 22 of each of the hooks 21, in the final opening position in figure 6. The mutual engagement of the hooks 21 and of the side wall 16 gives stability to lid 12 in the opening position in figure 6, wherein access to the inside of basin 11 is possible and allowed without any risk for lid 12 to accidentally switch (fall back) into the closing position in figure 1 or to detach from basin 11, for example falling back onto the surface of a changing station. Obviously, the operations for repositioning lid 12 from the opening position in figure 6 to the closing one in figure 1 are in reverse order to those described above for switching from the closing position to the opening one and therefore a detailed description thereof is omitted for the sake of conciseness.

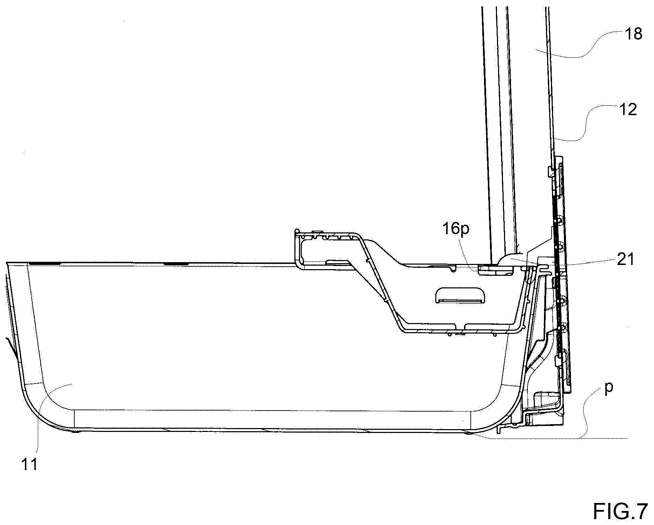

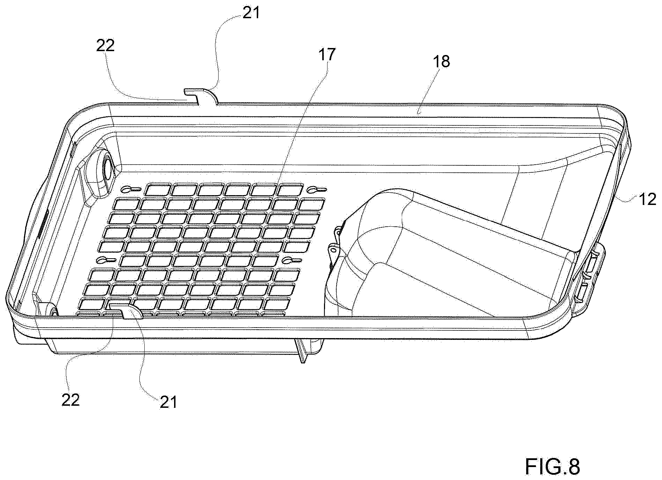

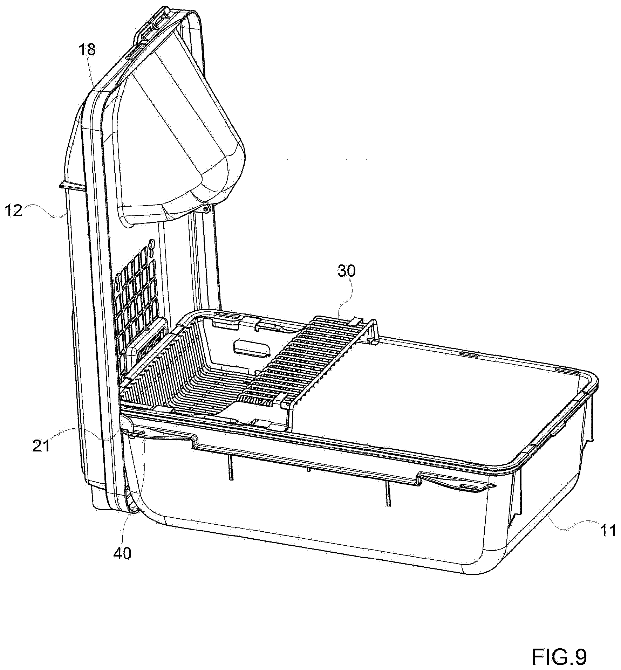

Moreover, it is important to note how the system described ensures further advantages concerning the actual position of lid 12 in the opening position in figure 6 in addition to the advantages related to the facilitated switching of the lid. Firstly, it is worth noting that only a portion of the edge 18 of lid 12 is in contact with the outer surface of basin 11. Moreover, lid 12 substantially is parallel to the side wall 16, wherein therefore, also in the opening position in figure 6, the mutual engagement of the hooks 21 and of the side wall 16 does not prevent lid 12 from being separated from basin 11, for example to be placed on the work surface of a changing station; contrarily, for the purpose it is simply required to lift the lid, thereby releasing the hooks 21 from the side wall 16. Moreover, as depicted in figure 7, with basin 11 resting on a work surface P, lid 12 is raised with respect to surface P, wherein no part or portion of lid 12 is in contact with said surface P. A description of a further embodiment of cage 10 according to the present invention is given below with reference to figures 8 and 9; component and/or characteristic parts also in figures 8 and 9, which were already described above with reference to other drawings, are identified by the same reference numerals. As depicted in figures 8 and 9, in the case of the embodiment therein depicted, the shape of the hooks 21 substantially corresponds to that of the hooks 21 according to the embodiment described above; the hooks 21 indeed define each a housing and engagement seat 22 which is entirely similar to that defined by each of the hooks depicted for example, in figure 5. However, in the case of this further embodiment, the location of the hooks 21 differs from that of the hooks according to the preceding embodiment. Here indeed, the hooks 21 do not extend from the inner surface of the covering portion 17 of lid 12, rather from the lateral edge 18, each defining an extension thereof which substantially is parallel to the extension direction of edge 18. The hooks 21 therefore are positioned more externally. With regards to basin 11, each of the two opposed side walls 16 comprises a portion which extends from the wall itself towards the outside of the basin to define an engagement slot 40. With lid 12 in the opening position in figure 9, each of the hooks 21 engages a related slot 40, wherein a portion of slot 40 is accommodated in the housing and engagement seat 22 of hook 22.

The switching methods of lid 12 from the closing position to the opening one and vice versa, as the rest of the arrangement of lid 12 with respect to basin 11 in the opening position in figure 9, substantially correspond to those described above, wherein therefore a detailed description thereof is omitted for the sake of conciseness. The embodiment depicted in figures 8 and 9 offers the advantage that, due to the "external" position of the hooks 21, the risk of interference of the hooks 21 with components or accessories inside basin 11 is avoided during the switching of lid 12, wherein contrarily, the arrangement of the hooks 21 according to the embodiment in figures 5 to 7 may result in the need to adapt the shape and/or position of said accessories, for example of feeder 30. Moreover, also in the case of this embodiment, with lid 12 in closing position, no part or portion of basin 11 is engaged or even only in contact with the hooks 21.

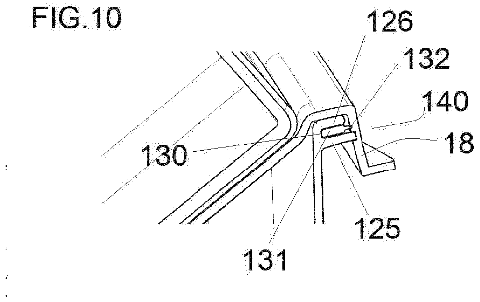

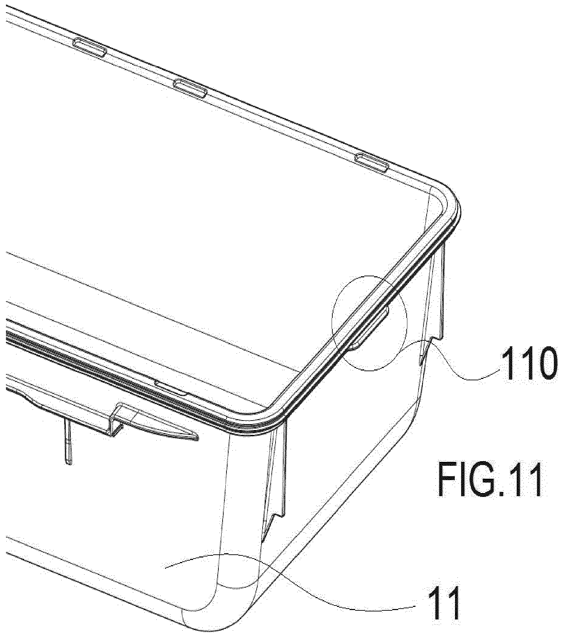

A description of a further solution which can be implemented according to the present invention in a cage for housing laboratory animals is given below with reference to the figures 10 and 11, wherein component and/or characteristic parts in figures 10 and 11, which were already described above with reference to other drawings, are identified by means of the same reference numerals.

As depicted, basin 11 comprises, at the upper edge, two peripheral ridges 125 and 126 which extend one parallel to the other over the whole periphery (perimeter) of basin 11 to join the side walls 16 of basin 11. Moreover, a tongue 110 extends from the lower ridge 125 (the one furthest from the upper edge of basin 11) towards the outside of basin 11; in particular, tongue 11 has a smaller peripheral extension than the peripheral extension of ridge 125 along the side wall 16, while it has a greater outward extension than that of ridge 125.

**In** particular, the tongue has a peripheral (perimetral) extension which is smaller than the peripheral extension of the single side wall from which it extends towards the outside. Moreover, and again as depicted, the lateral edge 18, in position corresponding to that of the tongue 110 (with lid 12 positioned over basin 11 in closing position), has an engagement seat 140 adapted to be engaged by tongue 110 with lid 12 in the aforesaid closing position (figure 10). Said engagement seat 140 therefore has a peripheral extension substantially coincident with or slightly greater than that of tongue 110, and width (in the transverse direction to that of the peripheral extension, i.e. in the vertical direction) which is substantially coincident with or slightly greater than the thickness of tongue 110.

**It** arises therefore from the above structural description of tongue 110 and related engagement seat 140, that the positioning of lid 12 over basin 11 up to reaching the final closing position of lid 12 results in the practically automatic engagement of seat 140 by tongue 110, and in any case without the need for the operator to act on any of them, the engagement of seat 140 by tongue 110 therefore being a mutual restraint between lid 12 and basin 11 such as to prevent the removal or in any case accidental movements of lid 12, the restraint between basin 11 and lid 12 moreover not requiring the use and therefore the implementation of additional restraint means such as handles, clips or the like.

Likewise, the release of lid 12 from basin 11 is obtained by means of simple and immediate operations, for example by pressure towards the inside 14 of basin 11 on the side wall 16 of basin 11 including tongue 110 up to releasing (causing the exit of) tongue 110 from seat 140, this operation being decidedly less invasive for the operator than those required in case of additional restraint means such as handles, clips or the like.

Moreover, the absence of said handles or similar restraint means increases the visibility from the outside of the inside of basin 11 and avoids stress problems for the animals resulting from the noise generated by the implementation of said handles or similar restraint means.

Obviously, although a basin 11 with solely one side wall 16 including engagement tongue 110 was described, different embodiments (and not depicted) fall within the scope of the present invention according to which for example, tongue 110 is present in more than one side wall 16 and/or one or more side walls 16 comprise more than one tongue.

Finally, with regard to the one or more engagement seats 140, the same may be both blind and through and therefore have smaller depth than the thickness of edge 18 or of the side wall 16, respectively, or equal to said thickness of edge 18 or of the side wall 16 of basin 11, respectively.

Moreover, although in the embodiment as depicted in the drawings and disclosed above, the tongue 110 is delimited in the thickness (vertical) direction by two opposite end surfaces parallel to each other and each parallel to the flat portion of the bottom wall 13 of basin 11, the orientation of one of both of said opposite end surfaces of tongue 110, according to the present invention, can be changed and selected according to the needs and/or circumstances. As an example, one or both of the lower and upper end surfaces can be inclined with respect to the flat portion of the bottom wall 13 so as to confer to the tongue 110 a substantially triangular or trapezoidal cross section. Furthermore, and still within the scope of the present invention, the tongue 110 can extend from the upper ridge 126 instead that from the lower one 125.

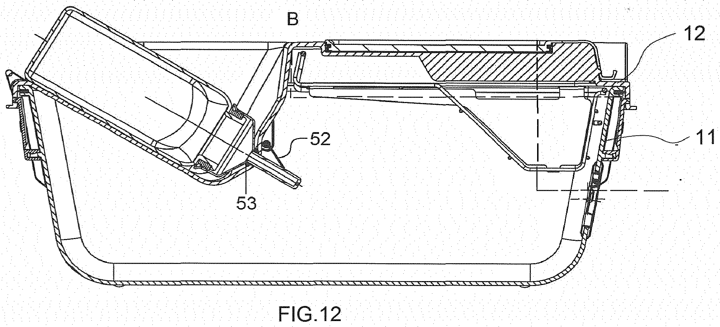

A similar cage, which contains some features of the present invention but is not a further embodiment of the present invention, is described below with reference to figures 12 to 15, wherein component and/or characteristic parts depicted in figures 12 to 15, which were already described above with reference to other drawings, are identified by the same reference numerals.

As depicted in figure 12 (but also in figure 10), the two first 125 and second 126 peripheral ridges define a peripheral housing seat 130 (which therefore extends over the whole periphery or perimeter of basin 11) in which a sealing gasket 131 is accommodated, and therefore selected to ensure the isolation of the inside of the basin 11/cover 12 system from the outside and vice versa, with lid 12 positioned over basin 11 in closing position.

For this purpose, indeed, gasket 131 comprises a main portion accommodated in seat 130 and an extension and contrasting portion 132 which extends from the main portion through opening, with which seat 130 (closed on three sides) communicates with the outside, portion 132 therefore extending outside seat 130.

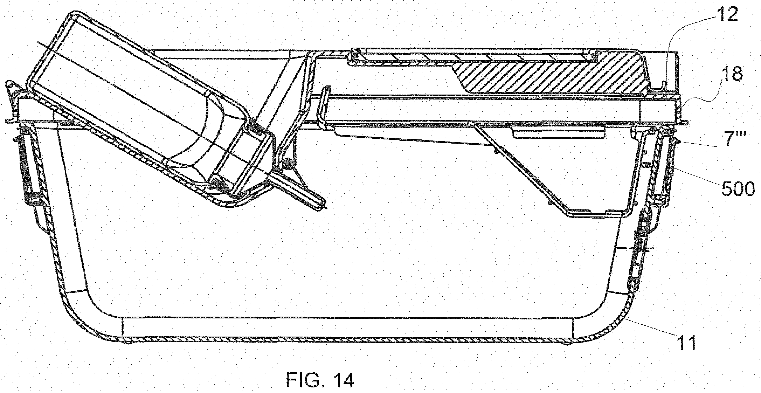

It therefore is deduced that as depicted, starting from the configuration in figure 14 (with lid 12 released from basin 11), the positioning of lid 12 over basin 11 up to reaching the closing position (with possible reciprocal engagement of tongue 110 with corresponding engagement seat 140) results in a contrast between the portion 132 of gasket 131 and the lateral edge 18 of lid 12, and therefore in the elastic deformation of portion 132, the elastic contrast between portion 132 and the lateral edge 18 therefore ensuring the isolation from the inside of the basin 11/lid 12 system from the outside.

Moreover, the elastic deformation of portion 132 increases the restraint between lid 12 and basin 11, possibly allowing to avoid the use of further restraints, possibly also of tongue 110 and related engagement seat 140 described above with reference to figures 10 and 11.

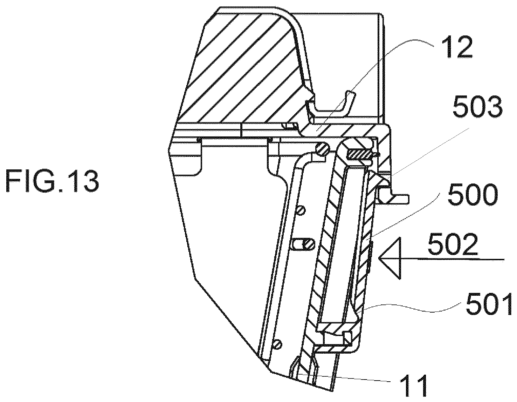

However, said further restraint means are not necessarily to be avoided, wherein in the case they are considered useful and/or suitable, a possible embodiment thereof is depicted in figure 13.

Reference 500 in figure 13 identifies a plate-shaped latch connected to basin 11, wherein the plate comprises a curvature line 501 with a smaller thickness which makes the plate switchable by rotation with respect to basin 11 in the two opposite directions of rotation indicated by the dual arrow in figure 13, wherein the plate further comprises a protruding hook 502 which, with lid 12 in the closing position, engages a slot 503 obtained in the lateral edge 18 of lid 12.

The positioning of lid 12 over basin 11 up to reaching the closing position in figure 13 therefore results in the rotation of the plate in anticlockwise direction and then in the rotation thereof in clockwise direction, with subsequent coupling or engagement of hook 502 in slot 503 and therefore in the mutual restraint of lid 12 and of basin 11.

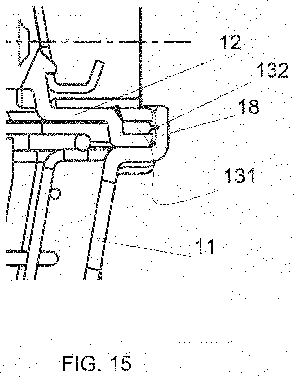

Finally, according to the alternative embodiment in figure 15, seat 130 may be provided not in basin 11 but rather be defined by lid 12, wherein the elastic deformation of the extension 132 of gasket 131 occurs here by contrast with a lateral edge 18' defined by basin 11.

It has therefore been demonstrated by means of the detailed description above of the embodiments of the present invention depicted in the drawings, that the present invention allows the desired results to be obtained and the drawbacks encountered in the prior art to be overcome or at least limited.

**In** particular, switching methods of lid 12 which were entirely impossible in the case of the cages according to the prior art, are allowed by the present invention. **In** detail, such entirely innovative switching methods allow opening the cage by means of switching lid 12 without any need to separate lid 12 from basin 11, wherein lid 12 moreover may be separated from basin 11, if required, according to methods substantially coincident with those for separating the lid from the basin in the case of the cages according to the prior art, in particular with lid 12 in both the opening and closing positions. **In** other words, there is absolutely no need to switch lid 12 into the opening position beforehand to separate lid 12 from cage 11 with the lid in closing position, wherein likewise, there is no need to switch lid 12 from the opening position to the closing position beforehand to separate lid 12 from basin 11 with the lid in opening position.

Moreover, the present invention provides a closing and opening system which allows both restraining and releasing the lid to and from the basin, respectively, by means of simple and immediate operations and methods which are not very intrusive for the operator, and also avoiding the use of systems and/or handles or the like, as summarized above.

Finally, the present invention provides a gasket which is shaped and positioned not only so as not to hinder the restraining and releasing of the lid to and from the basin, respectively, but contrarily so as to improve both the aforesaid restraint and isolation of the inside of the cage.

Although the present invention was clarified above by means of the detailed description of the embodiments thereof depicted in the drawings, the present invention is not limited to the embodiments described and depicted in the drawings; contrarily, all those variants and/or modifications of the embodiments described and depicted in the accompanying drawings, which are apparent and obvious to those skilled in the art, fall within the scope of the present invention. For example, the number of the hooks 21 and tongues 110 and the position thereof may be selected according to needs and/or circumstances. Likewise, the orientation of the hooks may be selected so that the hooks 21, with the lid in the opening position, engage any one of the side walls 16 of basin 11.

Restraint means 20 of magnetic type, including for example magnets fastened to the lid and to the basin, also fall within the scope of the present invention. Moreover, it is to be considered that due to the repositioning of the lid, the solution according to the present invention is applicable to lids of any type, in particular also for non-ventilated cages.

Finally, it is to be noted that the various solutions described above may be implemented both separately and combined, wherein for example, a lid 12 according to the present invention may comprise only gasket 131 or one or more of the hooks 22 and/or the engagement seat 140, possibly combined, and therefore be used combined with one or more tongues 110.

The scope of protection of the present invention is therefore defined by the claims.

## Claims

1. A cage (10) for housing laboratory animals, said cage comprising a basin (11) and a movable lid (12) adapted to be positioned over said basin (11) in a first closing position in which it prevents the access to the inner space (14) delimited by said basin (11) and repositioned in a second opening position in which it does not prevent said inner space (14) from being accessed, wherein said basin (11) comprises a bottom wall (13) with at least one substantially flat portion and a plurality of side walls (16) extending from said bottom wall (13) and joined to one another to delimit said inner space (14), wherein said lid (12) comprises a main portion (17) and a lateral engagement edge (18) defined by a corresponding plurality of side walls which are reciprocally joined, each extending from said main portion (17) to give said lateral engagement edge (18) a skirt or apron shape, wherein with said lid (12) in said first closing position, said lateral engagement edge (18) is positioned
adjacent to said side walls (16), wherein said cage (10) comprises an engagement tongue (110) extending from one of said side walls (16) of said basin (11) towards the outside of said basin (11), wherein said cage (10) comprises an engagement seat (140) defined by said lateral engagement edge (18), wherein the positioning of said lid (12) over said basin (11) in said first closing position results in the automatic engagement of said engagement seat (140) by said engagement tongue (110), wherein said engagement results from insertion of said engagement tongue (110) into said engagement seat (140), wherein said cage (10) comprises a first peripheral ridge (125) extending from said basin (11) towards the outside of said basin (11) along the whole peripheral extension of said basin (11) to join said side walls (16) of said basin (11), wherein said engagement tongue (110) has a smaller peripheral extension than the peripheral extension of said first peripheral ridge (125), wherein said engagement tongue (110) has an extension towards the outside of said basin (11) which is greater than that of said first peripheral ridge (125), **characterized in that** said engagement tongue (110) extends from said first peripheral ridge (125), and **in that** said engagement tongue (110) and said first peripheral ridge (125) lie in a common plane.

2. A cage (10) according to claim 1, **characterized in that** the extension direction towards the outside of said basin (11) of said engagement tongue (110) lies in a plane which is substantially parallel to said at least one substantially flat portion of said bottom wall (13).

3. A cage (10) according to one of the claims from 1 to 2, **characterized in that** said basin (11) and said lid (12) have a substantially rectangular plan shape and therefore each comprises four side walls (16) opposed to one another in pairs, and **in that** said engagement tongue (110) extends from one of the two shorter side walls (16) among said four side walls (16) of said basin (11).

4. A cage (10) according to one of the claims from 1 to 3, **characterized in that** said engagement seat (140) extends from the inner surface of said lateral engagement edge (18) which, with said lid (12) in said first closing position, is adjacent to said side walls (16) of said basin (11), over part of the thickness of said lateral engagement edge (18), said engagement seat (140) thus being not open at the outer surface of said lateral engagement edge (18) opposed to said inner surface.

5. A cage (10) according to one of the claims from 1 to 3, **characterized in that** said engagement seat (140) extends from the inner surface of said lateral engagement edge (18) which, with said lid (12) in said first closing position, is adjacent to said side walls (16) of said basin (11), over the whole thickness of said lateral engagement edge (18), said engagement seat (140) thus being through and open at the outer surface of said lateral engagement edge (18) opposed to said inner surface.

6. A cage according to one of claims 1 to 5, **characterized in that** said basin (11) comprises a second peripheral ridge (126) extending parallel to said first peripheral ridge (125) towards the outside of said basin (11) along the whole periphery of said basin (11), to join said side walls (16) of said basin (11), wherein said second peripheral ridge (126), together with said first peripheral ridge (125), defines a housing seat (130) with a substantially U-shaped transverse section having an opening facing the outside of said basin (11), and **in that** a sealing gasket (131) is accommodated in said housing seat (130), which sealing gasket (131) is adapted to ensure the isolation of said inner space (14) with said lid (12) in said first closing position.

7. A cage according to claim 6, **characterized in that** said sealing gasket (131) comprises a portion (132) extending through said opening of said housing seat (130), and **in that** with said lid (12) in said first closing position, said portion (132) of said gasket (131) is elastically deformed by the contrast with said lateral engagement edge (18) of said lid (12).

8. A cage (10) according to one of the claims from 1 to 7, **characterized in that** the disengagement of said engagement tongue (110) from said engagement seat (140) takes place by pressing towards said inner space (14), the pressing action being exerted on said side wall (16) from which said engagement tongue (110) extends.

9. A cage (10) according to one of the claims from 1 to 8, **characterized in that** said engagement tongue (110) is integral with said first peripheral ridge (125).

10. A cage (10) according to one of the claims from 1 to 9, **characterized in that** one or both of the lower and upper end surfaces of said engagement tongue (110) are inclined with respect to the flat portion of the bottom wall (13) of said basin (11) so as to confer to the engagement tongue (110) a substantially triangular or trapezoidal cross section.

## Patentansprüche

1. Käfig (10) zur Unterbringung von Labortieren, wobei der Käfig einen Behälter (11) und einen beweglichen Deckel (12) umfasst, der dazu geeignet ist, über dem Behälter (11) in einer ersten Schließposition positioniert zu werden, in der er den Zugang zu dem durch den Behälter (11) begrenzten Innenraum (14) verhindert, und in einer zweiten Öffnungsposition repositioniert zu werden, in der er den Zugang zu dem Innenraum (14) nicht verhindert, wobei der Behälter (11) eine Bodenwand (13) mit mindestens einem im Wesentlichen flachen Abschnitt und eine Vielzahl von Seitenwänden (16) umfasst, die sich von der Bodenwand (13) erstrecken und miteinander verbunden sind, um den Innenraum (14) zu begrenzen, wobei der Deckel (12) einen Hauptabschnitt (17) und einen seitlichen Eingriffsrand (18) umfasst, der durch eine entsprechende Vielzahl von Seitenwänden definiert ist, die wechselseitig verbunden sind und sich jeweils von dem Hauptabschnitt (17) erstrecken, um dem seitlichen Eingriffsrand (18) eine Einfassungs- oder Schürzenform zu verleihen, wobei, wenn sich der Deckel (12) in der ersten Schließposition befindet, der seitliche Eingriffsrand (18) angrenzend an die Seitenwände (16) positioniert ist, wobei der Käfig (10) eine Eingriffszunge (110) umfasst, die sich von einer der Seitenwände (16) des Behälters (11) zu der Außenseite des Behälters (11) hin erstreckt, wobei der Käfig (10) einen Eingriffssitz (140) umfasst, der durch den seitlichen Eingriffsrand (18) definiert ist, wobei die Positionierung des Deckels (12) über dem Behälter (11) in der ersten Schließposition zum automatischen Eingriff des Eingriffssitzes (140) durch die Eingriffszunge (110) führt, wobei der Eingriff aus dem Einführen der Eingriffszunge (110) in den Eingriffssitz (140) resultiert, wobei der Käfig (10) eine erste Umfangsleiste (125) umfasst, die sich von dem Behälter (11) zu der Außenseite des Behälters (11) entlang der gesamten Umfangsausdehnung des Behälters (11) erstreckt, um die Seitenwände (16) des Behälters (11) zu verbinden, wobei die Eingriffszunge (110) eine geringere Umfangsausdehnung als die Umfangsausdehnung der ersten Umfangsleiste (125) aufweist, wobei die Eingriffszunge (110) eine Ausdehnung zu der Außenseite des Behälters (11) hin aufweist, die größer als diejenige der ersten Umfangsleiste (125) ist, **dadurch gekennzeichnet, dass** sich die Eingriffszunge (110) von der ersten Umfangsleiste (125) erstreckt, und dadurch, dass die Eingriffszunge (110) und die erste Umfangsleiste (125) in einer gemeinsamen Ebene liegen.

2. Käfig (10) nach Anspruch 1, **dadurch gekennzeichnet, dass** die Ausdehnungsrichtung zu der Außenseite des Behälters (11) der Eingriffszunge (110) in einer Ebene liegt, die im Wesentlichen parallel zu dem mindestens einen im Wesentlichen flachen Abschnitt der Bodenwand (13) verläuft.

3. Käfig (10) nach einem der Ansprüche 1 bis 2, **dadurch gekennzeichnet, dass** der Behälter (11) und der Deckel (12) eine im Wesentlichen rechteckige Grundrissform aufweisen und daher jeweils vier Seitenwände (16) umfassen, die sich paarweise gegenüberliegen, und dadurch, dass sich die Eingriffszunge (110) von einer der zwei kürzeren Seitenwände (16) unter den vier Seitenwänden (16) des Behälters (11) erstreckt.

4. Käfig (10) nach einem der Ansprüche 1 bis 3, **dadurch gekennzeichnet, dass** sich der Eingriffssitz (140) von der Innenfläche des seitlichen Eingriffsrands (18), der, wenn sich der Deckel (12) in der ersten Schließposition befindet, an die Seitenwände (16) des Behälters (11) angrenzt, über einen Teil der Dicke des seitlichen Eingriffsrands (18) erstreckt, wobei der Eingriffssitz (140) somit an der der Innenfläche gegenüberliegenden Außenfläche des seitlichen Eingriffsrands (18) nicht offen ist.

5. Käfig (10) nach einem der Ansprüche 1 bis 3, **dadurch gekennzeichnet, dass** sich der Eingriffssitz (140) von der Innenfläche des seitlichen Eingriffsrands (18), der, wenn sich der Deckel (12) in der ersten Schließposition befindet, an die Seitenwände (16) des Behälters (11) angrenzt, über die gesamte Dicke des seitlichen Eingriffsrands (18) erstreckt, wobei der Eingriffssitz (140) somit an der der Innenfläche gegenüberliegenden Außenfläche des seitlichen Eingriffsrands (18) durchgehend und offen ist.

6. Käfig nach einem der Ansprüche 1 bis 5, **dadurch gekennzeichnet, dass** der Behälter (11) eine zweite Umfangsleiste (126) umfasst, die sich parallel zu der ersten Umfangsleiste (125) zu der Außenseite des Behälters (11) entlang des gesamten Umfangs des Behälters (11) erstreckt, um die Seitenwände (16) des Behälters (11) zu verbinden, wobei die zweite Umfangsleiste (126) zusammen mit der ersten Umfangsleiste (125) einen Gehäusesitz (130) mit einem im Wesentlichen U-förmigen Querschnitt definiert, der eine zu der Außenseite des Behälters (11) weisende Öffnung aufweist, und dadurch, dass eine Dichtung (131) in dem Gehäusesitz (130) untergebracht ist, wobei die Dichtung (131) dazu geeignet ist, die Isolierung des Innenraums (14) zu gewährleisten, wenn sich der Deckel (12) in der ersten Schließposition befindet.

7. Käfig nach Anspruch 6, **dadurch gekennzeichnet, dass** die Dichtung (131) einen Abschnitt (132) umfasst, der sich durch die Öffnung des Gehäusesitzes (130) erstreckt, und dadurch, dass, wenn sich der Deckel (12) in der ersten Schließposition befindet, der Abschnitt (132) der Dichtung (131) durch den Kontrast mit dem seitlichen Eingriffsrand (18) des Deckels (12) elastisch verformt wird.

8. Käfig (10) nach einem der Ansprüche 1 bis 7, **dadurch gekennzeichnet, dass** das Ausrücken der Eingriffszunge (110) aus dem Eingriffssitz (140) durch Drücken zu dem Innenraum (14) hin erfolgt, wobei die Druckwirkung auf die Seitenwand (16) ausgeübt wird, von der sich die Eingriffszunge (110) erstreckt.

9. Käfig (10) nach einem der Ansprüche 1 bis 8, **dadurch gekennzeichnet, dass** die Eingriffszunge (110) einstückig mit der ersten Umfangsleiste (125) ausgebildet ist.

10. Käfig (10) nach einem der Ansprüche 1 bis 9, **dadurch gekennzeichnet, dass** eine oder beide der unteren und oberen Endflächen der Eingriffszunge (110) in Bezug auf den flachen Abschnitt der Bodenwand (13) des Behälters (11) geneigt sind, um der Eingriffszunge (110) einen im Wesentlichen dreieckigen oder trapezförmigen Querschnitt zu verleihen.

## Revendications

1. Cage (10) destinée à loger des animaux de laboratoire, ladite cage comprenant un bac (11) et un couvercle mobile (12) apte à être positionné au-dessus dudit bac (11) dans une première position de fermeture dans laquelle il empêche l'accès à l'espace intérieur (14) délimité par ledit bac (11) et repositionné dans une deuxième position d'ouverture dans laquelle il n'empêche pas l'accès audit espace intérieur (14), dans laquelle ledit bac (11) comprend une paroi de fond (13) avec au moins une portion sensiblement plate et une pluralité de parois latérales (16) s'étendant à partir de ladite paroi de fond (13) et reliées les unes aux autres pour délimiter ledit espace intérieur (14), dans laquelle ledit couvercle (12) comprend une portion principale (17) et un bord d'engagement latéral (18) défini par une pluralité correspondante de parois latérales qui sont reliées de manière réciproque, s'étendant chacune depuis ladite portion principale (17) pour donner audit bord d'engagement latéral (18) une forme de jupe ou de tablier, dans laquelle avec ledit couvercle (12) dans ladite première position de fermeture, ledit bord d'engagement latéral (18) est positionné adjacent auxdites parois latérales (16), dans laquelle ladite cage (10) comprend une languette d'engagement (110) s'étendant depuis l'une desdites parois latérales (16) dudit bac (11) vers l'extérieur dudit bac (11), dans laquelle ladite cage (10) comprend un siège d'engagement (140) défini par ledit bord d'engagement latéral (18), dans laquelle le positionnement dudit couvercle (12) au-dessus dudit bac (11) dans ladite première position de fermeture entraîne l'engagement automatique dudit siège d'engagement (140) par ladite languette d'engagement (110), dans laquelle ledit engagement résulte de l'insertion de ladite languette d'engagement (110) dans ledit siège d'engagement (140), dans laquelle ladite cage (10) comprend une première nervure périphérique (125) s'étendant depuis ledit bac (11) vers l'extérieur dudit bac (11) le long de toute l'extension périphérique dudit bac (11) pour relier lesdites parois latérales (16) dudit bac (11), dans laquelle ladite languette d'engagement (110) présente une extension périphérique plus petite que l'extension périphérique de ladite première nervure périphérique (125), dans laquelle ladite languette d'engagement (110) présente une extension vers l'extérieur dudit bac (11) qui est supérieure à celle de ladite première nervure périphérique (125), **caractérisée en ce que** ladite languette d'engagement (110) s'étend à partir de ladite première nervure périphérique (125), et **en ce que** ladite languette d'engagement (110) et ladite première nervure périphérique (125) se trouvent dans un plan commun.

2. Cage (10) selon la revendication 1, **caractérisée en ce que** la direction d'extension vers l'extérieur dudit bac (11) de ladite languette d'engagement (110) se trouve dans un plan qui est sensiblement parallèle à ladite au moins une portion sensiblement plate de ladite paroi de fond (13).

3. Cage (10) selon l'une des revendications 1 à 2, **caractérisée en ce que** ledit bac (11) et ledit couvercle (12) ont une forme de plan sensiblement rectangulaire et comprennent donc chacun quatre parois latérales (16) opposées l'une à l'autre par paires, et **en ce que** ladite languette d'engagement (110) s'étend depuis l'une des deux parois latérales plus courtes (16) parmi lesdites quatre parois latérales (16) dudit bac (11).

4. Cage (10) selon l'une des revendications 1 à 3, **caractérisée en ce que** ledit siège d'engagement (140) s'étend à partir de la surface interne dudit bord d'engagement latéral (18) qui, avec ledit couvercle (12) dans ladite première position de fermeture, est adjacente auxdites parois latérales (16) dudit bac (11), sur une partie de l'épaisseur dudit bord d'engagement latéral (18), ledit siège d'engagement (140) n'étant ainsi pas ouvert au niveau de la surface externe dudit bord d'engagement latéral (18) opposée à ladite surface interne.

5. Cage (10) selon l'une des revendications 1 à 3, **caractérisée en ce que** ledit siège d'engagement (140) s'étend à partir de la surface interne dudit bord d'engagement latéral (18) qui, avec ledit couvercle (12) dans ladite première position de fermeture, est adjacente auxdites parois latérales (16) dudit bac (11), sur toute l'épaisseur dudit bord d'engagement latéral (18), ledit siège d'engagement (140) étant ainsi traversant et ouvert au niveau de la surface externe dudit bord d'engagement latéral (18) opposée à ladite surface interne.

6. Cage selon l'une des revendications 1 à 5, **caractérisée en ce que** ledit bac (11) comprend une deuxième nervure périphérique (126) s'étendant parallèlement à ladite première nervure périphérique (125) vers l'extérieur dudit bac (11) le long de toute la périphérie dudit bac (11), pour relier lesdites parois latérales (16) dudit bac (11), dans laquelle ladite deuxième nervure périphérique (126), conjointement avec ladite première nervure périphérique (125), définit un siège de logement (130) présentant une section transversale sensiblement en forme de U dont une ouverture est orientée vers l'extérieur dudit bac (11), et **en ce qu'**un joint d'étanchéité (131) est logé dans ledit siège de logement (130), lequel joint d'étanchéité (131) est apte à assurer l'isolation dudit espace intérieur (14) avec ledit couvercle (12) dans ladite première position de fermeture.

7. Cage selon la revendication 6, **caractérisée en ce que** ledit joint d'étanchéité (131) comprend une portion (132) s'étendant à travers ladite ouverture dudit siège de logement (130), et **en ce que**, avec ledit couvercle (12) dans ladite première position de fermeture, ladite portion (132) dudit joint (131) est déformée élastiquement par contact avec ledit bord d'engagement latéral (18) dudit couvercle (12).

8. Cage (10) selon l'une des revendications 1 à 7, **caractérisée en ce que** le désengagement de ladite languette d'engagement (110) d'avec ledit siège d'engagement (140) s'effectue par une pression exercée vers ledit espace intérieur (14), l'action de pression étant exercée sur ladite paroi latérale (16) à partir de laquelle s'étend ladite languette d'engagement (110).

9. Cage (10) selon l'une des revendications 1 à 8, **caractérisée en ce que** ladite languette d'engagement (110) est solidaire de ladite première nervure périphérique (125).

10. Cage (10) selon l'une des revendications 1 à 9, **caractérisée en ce que** l'une ou les deux surfaces d'extrémité inférieure et supérieure de ladite languette d'engagement (110) sont inclinées par rapport à la portion plate de la paroi de fond (13) dudit bac (11) de manière à conférer à la languette d'engagement (110) une section transversale sensiblement triangulaire ou trapézoïdale.
